# EUROPÄISCHE PATENTSCHRIFT

(11) **EP 1 050 695 B1**
(45) Veröffentlichungstag und Bekanntmachung des Hinweises auf die Patenterteilung: **25.08.2004**
(21) Anmeldenummer: 00890053.2
(22) Anmeldetag: 22.02.2000
(51) Int. Cl.: F16F 1/44, F16F 3/08

(54) **Federelement**
Spring
Ressort

(30) Priorität: 19.03.1999 AT 50299
(43) Veröffentlichungstag der Anmeldung: 08.11.2000
(73) Patentinhaber: Siemens SGP Verkehrstechnik GmbH, 1110 Wien (AT)
(72) Erfinder: Mongold, Martin, Dipl.-Ing., 8010 Graz (AT)
(74) Vertreter: Matschnig, Franz, Dipl.-Ing.

(56) Entgegenhaltungen:
- EP-A- 0 461 464
- EP-A- 0 472 046
- US-A- 4 262 889
- US-A- 4 833 305

## Beschreibung

Die Erfindung bezieht sich auf ein Federelement, bestehend aus zumindest zwei Endstücken und einem zwischen diesen angeordneten Elastomerblock, der mit den Innenflächen der Endstücke je verbunden ist, wobei der Elastomerblock durch Fasern verstärkt ist.

Federelemente dieser Art werden oft als Gummifedern bezeichnet und gelangen in vielfältiger Ausführung zum Einsatz, beispielsweise zur Schwingungsisolierung von Maschinen, als Primärfedern in Schienenfahrzeugen, etc. Dabei ist der Elastomer- oder Gummiblock üblicherweise auf die Innenflächen der Endstücke aufvulkanisiert oder geklebt. Wenngleich bei den Federelementen die Druckbelastung im Vordergrund steht, werden übliche Federelemente bzw. Gummifedern in vielen Einsatzfällen gezielt mehrachsig belastet. Gummi bzw. in Frage kommende elastomere Kunststoffe zeigen jedoch ein annähernd isotropes Verhalten, sodaß verschiedene Steifigkeiten in unterschiedlichen Richtungen über die Formgebung erzielt werden. Eine andere Möglichkeit besteht darin, den Elastomerblock durch Fasern zu verstärken, wie dies beispielsweise aus der US-A-4 262 889 bekannt ist, in welcher der Elastomerblock mit kurzen Fasern verstärkt ist. Die Praxis bringt hier jedoch Probleme bei der Auslegung mit sich, wenn man die Maximalverformungen, unterschiedliche Belastungsrichtungen und auch noch die Herstellbarkeit bzw. die Herstellungskosten berücksichtigt.

Eine Aufgabe der Erfindung liegt darin, die genannten Probleme bei Federelementen zu verringern, d. h. eine größere Flexibilität bei der Federauslegung unter Berücksichtigung von Baugröße und Preis zu erzielen.

Diese Aufgabe läßt sich mit einem Federelement der eingangs genannten Art erreichen, bei welchem erfindungsgemäß die Fasern mit ihrer jeweiligen Faserlänge den Elastomerblock durchsetzen und/oder einen Außenumfang des Elastmerblocks umschlingen. Dadurch ist es beispielsweise bei einem blockartigen Federerlement, das hohe Druckkräfte aufnehmen muß, möglich, die Drucksteifigkeit zu erhöhen, ohne dabei die Schubsteifigkeit bei Verschieben quer zu den Druckwirkungslinien, wesentlich zu ändern. Dabei müssen die Werkstoffe nicht mehr bis an ihre Grenzen ausgenutzt werden, und man erhält eine größere Lebensdauer und Sicherheit bei erfindungsgemäßen Federelementen. Die Kosten für die Herstellung, Wartung und Instandhaltung der Federelemente können gleichfalls gesenkt werden. Außerdem kann gegebenenfalls beispielsweise ein seitliches "Herausquellen" des Elastomerblocks verhindert werden.
Bei einer vorteilhaften Ausführungsform sind die Endstücke im wesentlichen plattenförmig und parallel zueinander angeordnet, wobei der Elastomerblock ein Prisma oder ein Zylinder ist.

Insbesondere im letztgenannten Fall ergeben sich praxisgerechte Ausführungen, falls der Elastomerblock in im wesentlichen zwischen den Innenflächen verlaufenden Wirkungslinien auf Druck belastbar ist, wobei die Fasern im wesentlichen normal zu den Wirkungslinien verlaufen.

Eine andere zweckmäßige Ausführung der Erfindung zeichnet sich dadurch aus, daß die Endstücke als Zylinderhülsen ausgebildeten und koaxial zu einander angeordnet sind, wobei der Elastomerblock die Form einer Zylinderbuchse besitzt.

Weiters können bei einer anderen empfehlenswerten Ausführungsform die Endstücke des Elastomerblocks kegelstumpfförmig sein, wobei der kegelstumpfförmige Elastomerblock in einer ein Endstück bildenden Außenhülse mit Boden sitzt und das andere Endstück von einem zentralen Bolzen gebildet ist.

Schließlich kann auch der gesamte Elastomerblock durch Fasern verstärkt sein, wobei durch Wahl der Faserrichtung und Faserdichte eine weitgehende Beeinflussung der Federeigenschaften möglich ist. Mit Vorteil ist dabei die Faserdichte im Umfangsbereich des Elastomerblocks am höchsten, da hierdurch die beste Ausnützung der Fasereigenschaften erzielt wird.

Für die gewünschte Federcharakteristik ist es in vielen Fällen zweckmäßig, wenn die Fasern unter Vorspannung in den Elastomerblock eingebracht sind.

Falls zumindest ein Teil der Fasern elektrisch leitend, zu Heizlängen zusammengefügt und mit elektrischen Anschlüssen versehen ist, besteht die Möglichkeit, das Federelement elektrisch zu beheizen, d. h. zu erwärmen. Dies bietet in der Folge die Möglichkeit, Federelemente nach der Erfindung auch in Klimaten mit niedrigen Temperaturen einzusetzen, da man die Federelemente rasch auf die optimale Betriebstemperatur bringen, bzw. auf dieser Temperatur halten kann. Zweckmäßigerweise sind dabei die Fasern Kohlefasern.

Mit Vorteil können die Fasern vorgereckte Polyamidfasern sein, da die Verwendung dieser Fasern zu kompakten und günstig herstellbaren Federelementen führt.

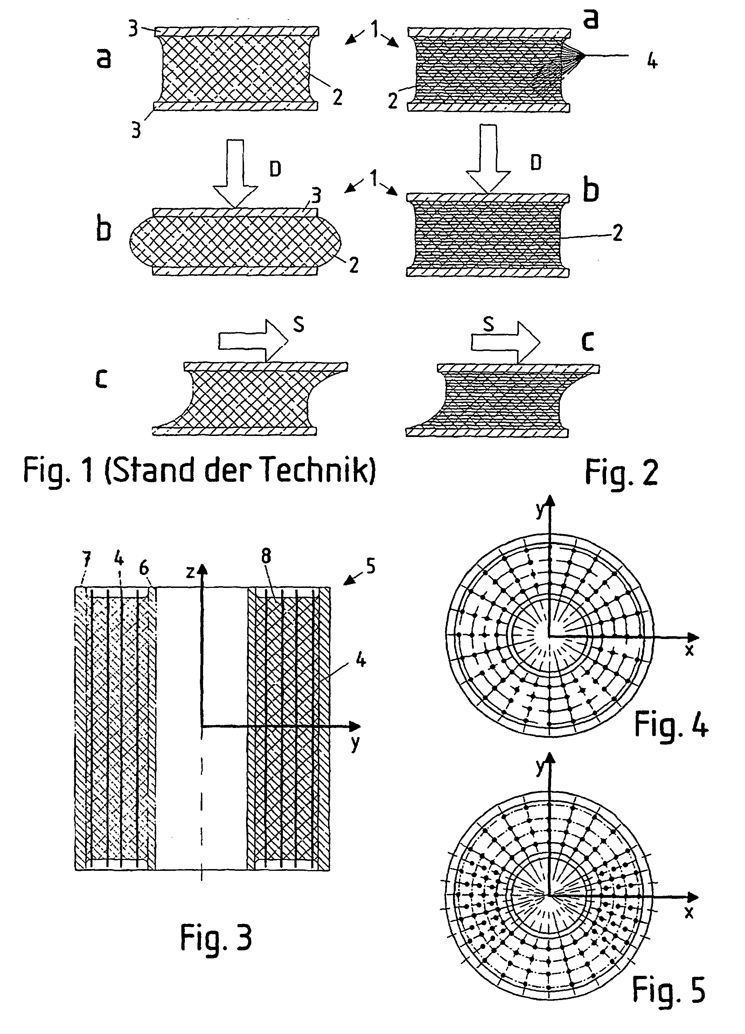

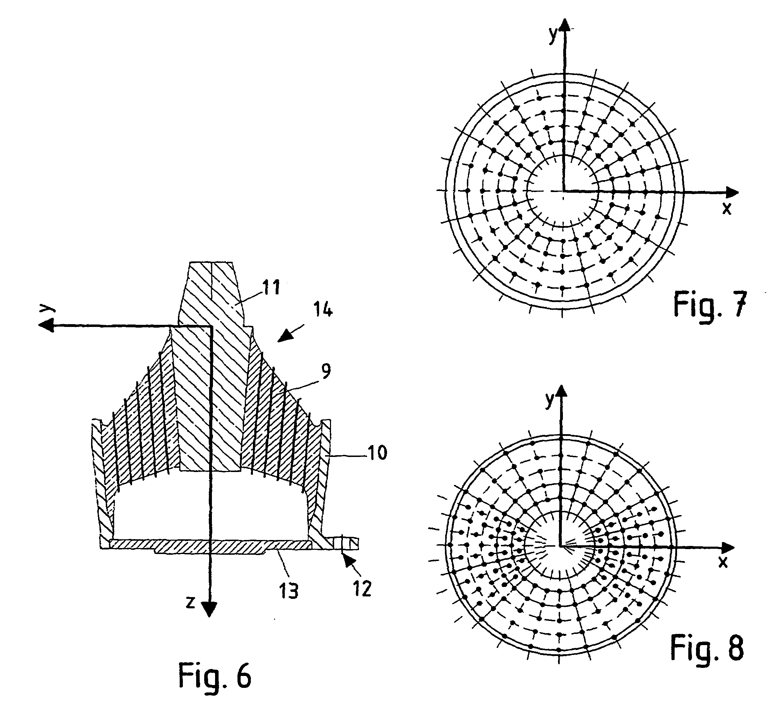

Die Erfindung samt weiteren Vorteilen ist im folgenden anhand beispielsweiser Ausführungsformen anhand der Zeichnung näher erläutert. In dieser zeigen
■ Fig. 1a - c ein blockförmiges Federelement nach dem Stand der Technik, jeweils ohne Belastung, mit Druckbelastung und mit Schubbelastung,
■ Fig. 2a - c in einer Darstellung entsprechend fig. 1 a - c ein entsprechendes Federelement nach der Erfindung,
■ Fig. 3 ein hohlzylindrisches Federelement nach der Erfindung in einem Axialschnitt,
■ Fig. 4 und 5 je in einem Radialschnitt mögliche Verteilungen von Fasern bei einem Federelement nach Fig. 3,
■ Fig. 6 ein konisches Federelement nach der Erfindung in einem Axialschnitt,
■ Fig. 7 und 8 in einem Radialschnitt durch das Federelement nach Fig. 6 mögliche Faserverteilungen innerhalb des Elastomerblocks.

In Fig. 1a ist ein Federelement 1 dargestellt, das aus einem Elastomerblock 2, z.B. einem Gummiblock und zwei Endstücken 3 besteht. Im vorliegenden Fall kann der Elastomerblock 2 beispielsweise im wesentlichen zylindrisch sein, und die Endstücke 3 können scheibenförmige Metallstücke sein, die mit dem Elastomerblock 2 verklebt oder mit diesem vulkanisiert sind. Ein Federelement 1, wie in Fig. 1a dargestellt, gehört dem Stand der Technik an.

Wenn ein derartiges Federelement auf Druck belastet wird, wie in Fig. 1b dargestellt, wobei die Druckkraft mit einem Pfeil D bezeichnet ist, wird der Elastomerblock 2 zusammengequetscht und er verformt sich, wobei ein seitliches Ausweichen in Form von Wülsten stattfindet. Das Federelement wird dabei eine gewisse Steifigkeit gegen die Druckkraft D zeigen.

Wird andererseits das Federelement, wie in Fig. 1c dargestellt, mit einer Schubkraft S belastet, so wird hier eine andere Steifigkeit auftreten und der Elastomerblock wird sich gleichfalls verformen, jedoch auf völlig andere Art, z. B. mit dem in Fig. 1c gezeigten Querschnitt.

In der Praxis werden meist kombinierte Beanspruchungen auftreten, z.B. eine Druck- und Schubbeanspruchung oder auch eine in Fig. 1 nicht gezeigte Torsionsbeanspruchung.

Das in Fig. 2 dargestellte Federelement entspricht zunächst jenem nach Fig. 1, doch ist hier der Elastomerblock 2 durch Fasern 4 verstärkt, die im Außenbereich und in Umfangsrichtung des Elastomerblocks 2 gewickelt sind. Wie aus Fig. 2b hervorgeht, kann der Elastomerblock 2 im Falle einer Druckbelastung D nicht mehr seitlich "herausquellen", da er durch die Fasern 4 zusammengehalten wird. Dies führt dazu, daß die Steifigkeit bei einer Druckbeanspruchung wesentlich größer sein wird, als bei Verwendung eines Elastomerblocks 2 ohne Faserverstärkung.

Der Fall einer Schubbeanspruchung durch eine Schubkraft S gemäß Fig. 2c ist jedoch mit einer Schubbelastung nach dem Stand der Technik gemäß Fig. 1c vergleichbar, d.h. es wird im wesentlichen die gleiche Steifigkeit auftreten.

Ein Vergleich der Fig. 1a, b, c mit Fig. 2a, b, c zeigt daher anschaulich, daß man es in der Hand hat, die Steifigkeiten des Federelementes 1 durch entsprechendes Auf- oder Einbringen von Fasern 4 zu steuern.

Das in Fig. 3 dargestellte Federelement 5 besteht aus zwei Endstücken 6 und 7, die je als koaxial angeordnete Zylinderhülsen ausgebildet sind, und zwischen diesen beiden Endstücken 7 und 5 liegt der Elastomerblock 8 in Form einer Zylinderbuchse. Ein Federelement gemäß Fig. 3 kann in radialer Richtung auf Druck (bzw. Zug) belastet werden, doch sind ebenso Belastungen in axialer Richtung möglich und auch Drehbelastungen. Die Axialrichtung ist hier mit einem Koordinatenpfeil z gekennzeichnet, wogegen in der Zeichenebene in Radialrichtung ein Pfeil y liegt. Erfindungsgemäß ist auch bei dieser Ausführungsform der Elastomerblock 8 mit Fasern 4 verstärkt, die hier in axialer Richtung durch den Elastomerblock 8 verlaufen. Die Faserverteilung kann beispielsweise rotationssymmetrisch sein, wie bei dem Schnitt einer Ausführungsform nach Fig. 4 dargestellt, doch kann die Faserdichte auch winkelabhängig sein, wie dies in Fig. 5 für eine andere Ausführungsform gezeigt ist. In ähnlicher Weise kann die Faserdichte im Umfangsbereich wesentlich höher gehalten sein, als im Innenbereich etc. Bei der Ausführung nach Fig. 4 liegt beispielsweise ein konstantes Verhältnis der Axialsteifigkeit c_{z} zur Radialsteifigkeit cₓ bzw. c_{y} vor, wobei cₓ gleich c_{y} ist. Dagegen ist das Verhältnis Axialsteifigkeit c_{z} zur Radialsteifkeit cₓ bzw. c_{y} bei Ausführungsform nach Fig. 5 wiederum konstant, jedoch ist cₓ unterschiedlich von c_{y}, d. h. es liegt keine homogene Radialsteifigkeit wie bei Fig. 4, sondern eine winkelabhängige Radialsteifigkeit vor.

Die Ausführungsform nach Fig. 6 besitzt einen im wesentlichen kegelstumpfförmigen Elastomerblock 9, der in einem als Außenhülle ausgebildeten Endstück 10 sitzt, wobei das andere Endstück 11 als zentraler Bolzen ausgebildet ist. Bei der dargestellten Ausführungsform besitzt das äußere Endstück 10 noch einen Befestigungsflansch 12 mit einer Bohrung sowie einen Boden 13. Das dargestellte Federelement ist insgesamt mit 14 bezeichnet und kann beispielsweise als Primärfederung und Führung für Schienenfahrzeuge Verwendung finden. Auch hier sind im wesentlichen axial verlaufende Fasern 4 in dem Elastomerblock 9 vorgesehen, und die Fig. 7 bzw. 8 zeigen die Verteilung dieser Fasern in Analogie zu den Ausführungsformen nach Fig. 4 und 5. Natürlich ergibt die Ausführung nach Fig. 8 wiederum eine Winkelabhängigkeit der Radialsteifigkeit.

Auch bei den Ausführungen nach Fig. 3 bis 8 können Außenbereiche der Elastomerblöcke bevorzugt oder alleine durch Fasern verstärkt sein.

Die Elastomerblöcke können beispielsweise aus synthetischen Gummi oder anderen geeigneten Kunststoffen bestehen, und für die Erfindung geeignete Fasern sind beispielsweise Polyamidfasern, die zweckmäßig unter Vorspannung in die Form für den Elastomerblock eingebracht werden. Die Polyamidfasern können auch vorgereckt sein, doch ist prinzipiell für die Erfindung eine Vielzahl von Faserwerkstoffen verwendbar. Ein besonderer zusätzlicher Effekt ergibt sich, falls man für die Verstärkung elektrisch leitende Fasern, beispielsweise Kohlenstoffasern verwendet. Dabei kann zumindest ein Teil der Fasern zu Heizlängen zusammengefügt und mit elektrischen Anschlüssen versehen werden, sodaß das Federelement durch Stromfluß beheizbar ist. In Hinblick auf die geringe innere Wärmeleitung von Gummi oder ähnlichen Stoffen führt dies dazu, daß man durch elektrisches Beheizen Federelemente nach der Erfindung rasch auf die erforderliche Betriebstemperatur bringen kann, sodaß beispielsweise die bei sehr niedrigen Außentemperaturen auftretende Sprödigkeit von Gummi kein Problem darstellt.

Es sollte klar sein, daß dank der Erfindung den individuellen Erfordernissen angepaßte Federelemente geschaffen werden können, deren Steifigkeiten in unterschiedlichen Richtungen durch entsprechende Lage der Fasern vorgebbar sind. Im Vergleich zu herkömmlichen Gummifedern ergeben sich vielerorts Einsparungen hinsichtlich Volumen und Kosten, und neue Einsatzgebiete, die bisher für Gummifedern nicht zugänglich waren, können erschlossen werden.

## Patentansprüche

1. Federelement (1, 5, 14), bestehend aus zumindest zwei Endstücken (3) und einem zwischen diesen angeordneten Elastomerblock (2, 8, 9), der mit den Innenflächen der Endstücke je verbunden ist, wobei der Elastomerblock (2, 8, 9) durch Fasern (4) verstärkt ist, **dadurch gekennzeichnet, dass** die Fasern (4) mit ihrer jeweiligen Faserlänge den Elastomerblock (2, 8, 9) durchsetzen und/oder einen Außenumfang des Elastomerblocks (2, 8, 9) umschlingen.

2. Federelement (1) nach Anspruch 1, **dadurch gekennzeichnet, daß** die Endstücke (3) im wesentlichen plattenförmig und parallel zueinander angeordnet sind, wobei der Elastomerblock ein Prisma oder Zylinder ist (Fig. 2).

3. Federelement (1) nach Anspruch 1 oder 2, **dadurch gekennzeichnet, daß** der Elastomerblock (2) in im wesentlichen zwischen den Innenflächen verlaufenden Wirkungslinien auf Druck belastbar ist, wobei die Fasern (4) im wesentlichen normal zu den Wirkungslinien verlaufen.

4. Federelement (1) nach Anspruch 1, **dadurch gekennzeichnet, daß** die Endstücke (6, 7) als Zylinderhülsen ausgebildet und koaxial zueinander angeordnet sind, wobei der Elastomerblock (8) die Form einer Zylinderbuchse besitzt (Fig. 3).

5. Federelement (1) nach Anspruch 1, **dadurch gekennzeichnet, daß** die Endstücke (10, 11) des Elastomerblocks (9) kegelstumpfförmig sind.

6. Federelement (1) nach einem der Ansprüche 1 bis 5, **dadurch gekennzeichnet, daß** ein kegelstumpfförmiger Elastomerblock (9) in einer ein Endstück (10) bildenden Außenhülse sitzt, und das andere Endstück (11) von einem zentralen Bolzen gebildet ist (Fig. 6).

7. Federelement (1) nach einem der Ansprüche 1 bis 6, **dadurch gekennzeichnet, daß** der gesamte Elastomerblock (2, 8, 9) durch Fasern (4) verstärkt ist.

8. Federelement (1) nach Anspruch 7, **dadurch gekennzeichnet, daß** die Faserdichte im Umfangsbereich des Elastomerblocks (2, 8, 9) am höchsten ist.

9. Federelement (1) nach einem der Ansprüche 1 bis 8, **dadurch gekennzeichnet, daß** die Fasern unter Vorspannung in den Elastomerblock eingebracht sind.

10. Federelement (1) nach einem der Ansprüche 1 bis 9, **dadurch gekennzeichnet, daß** zumindest ein Teil der Fasern elektrisch leitend, zu Heizlängen zusammengefügt und mit elektrischen Anschlüssen versehen ist.

11. Federelement (1) nach Anspruch 10, **dadurch gekennzeichnet, daß** die Fasern Kohlefasern sind.

12. Federelement (1) nach einem der Ansprüche 1 bis 11, **dadurch gekennzeichnet, daß** die Fasern vorgereckte Polyamidfasern sind.

## Claims

1. A resilient element (1, 5, 14) comprising at least two terminators (3) and an intermediate elastomeric block (2, 8, 9) bonded to each of the inner surfaces of the terminators, which elastomeric block (2, 8, 9) is reinforced by fibers (4), **characterized in that** said fibers (4) penetrate said elastomeric block (2, 8, 9) over their entire length and/or entwine a circumference of said elastomeric block (2, 8, 9).

2. A resilient element (1) as defined in claim 1, **characterized in that** said terminators (3) are substantially lamellar and disposed in parallel relationship, and the elastomeric block is a prism or cylinder (Fig. 2).

3. A resilient element (1) as defined in claim 1 or claim 2, **characterized in that** the elastomeric block (2) is pressure-loadable through lines of action running substantially between the inner surfaces, said fibers (4) extending substantially normal to said lines of action.

4. A resilient element (1) as defined in claim 1, **characterized in that** the terminators (6, 7) are in the form of cylindrical sleeves and are coaxially disposed relatively to each other, and the elastomeric block (8) has the form of a cylinder liner (Fig. 3).

5. A resilient element (1) as defined in claim 1, **characterized in that** said terminators (10, 11) of the elastomeric block (9) have the shape of a truncated-cone.

6. A resilient element (1) as defined in any one of claims 1 to 5, **characterized in that** an elastomeric block having the shape of a truncated cone (9) is mounted in an external sleeve forming one terminator (10), and the other terminator (11) is in the form of a central bolt (Fig. 6).

7. A resilient element (1) as defined in any one of claims 1 to 6, **characterized in that** the entire elastomeric block (2, 8.9) is reinforced by fibers (4).

8. A resilient element (1) as defined in claim 7, **characterized in that** the density of the fibers is at its greatest in the peripheral region of the elastomeric block (2, 8, 9).

9. A resilient element (1) as defined in any one of claims 1 to 8, **characterized in that** the fibers are introduced into the elastomeric block under tension.

10. A resilient element (1) as defined in any one of claims 1 to 9, **characterized in that** at least a portion of the fibers are electrically conducting and combined to form heating strips provided with electrical connections.

11. A resilient element (1) as defined in claim 10, **characterized in that** the fibers are carbon fibers.

12. A resilient element (1) as defined in any one of claims 1 to 11, **characterized in that** the fibers are prestretched polyamide fibers.

## Revendications

1. Elément de ressort (1, 5, 14) constitué d'au moins deux parties terminales (3) et d'un bloc d'élastomère (2, 8, 9) disposé entre celles-ci, qui est relié aux surfaces intérieures de chacune des parties terminales, le bloc d'élastomère (2, 8, 9) étant renforcé par des fibres (4), **caractérisé en ce que** les fibres (4) traversent sur toute leur longueur de fibre respective le bloc d'élastomère (2, 8, 9) et/ou entourent un pourtour extérieur du bloc d'élastomère (2, 8, 9).

2. Elément de ressort (1) selon la revendication 1, **caractérisé en ce que** les parties terminales (3) présentent pour l'essentiel une forme de plaque et sont disposées parallèlement l'une par rapport à l'autre, le bloc d'élastomère étant un prisme ou un cylindre (figure 2).

3. Elément de ressort (1) selon la revendication 1 ou 2, **caractérisé en ce que** le bloc d'élastomère (2) peut être sollicité en compression dans des lignes d'action s'étendant pour l'essentiel entre les surfaces intérieures, les fibres (4) s'étendant alors pour l'essentiel perpendiculairement aux lignes d'action.

4. Elément de ressort (1) selon la revendication 1, **caractérisé en ce que** les parties terminales (6, 7) sont configurées sous forme de manchons cylindriques et sont disposées de façon coaxiale l'une par rapport à l'autre, le bloc d'élastomère (8) possédant alors la forme d'une bague cylindrique (figure 3).

5. Elément de ressort (1) selon la revendication 1, **caractérisé en ce que** les parties terminales (10, 11) du bloc d'élastomère (9) présentent une forme de cône tronqué.

6. Elément de ressort (1) selon l'une des revendications 1 à 5, **caractérisé en ce qu'**un bloc d'élastomère (9) en forme de cône tronqué est logé dans un manchon extérieur formant une partie terminale (10), tandis que l'autre partie terminale (11) est formée par un axe central (figure 6).

7. Elément de ressort (1) selon l'une des revendications 1 à 6, **caractérisé en ce que** le bloc d'élastomère (2, 8, 9) dans sa totalité est renforcé par des fibres (4).

8. Elément de ressort (1) selon la revendication 7, **caractérisé en ce que** la densité des fibres est la plus élevée dans la zone circonférentielle du bloc d'élastomère (2, 8, 9).

9. Elément de ressort (1) selon l'une des revendications 1 à 8, **caractérisé en ce que** les fibres sont introduites dans le bloc d'élastomère en étant précontraintes.

10. Elément de ressort (1) selon l'une des revendications 1 à 9, **caractérisé en ce qu'**au moins une partie des fibres est conductrice d'électricité, assemblée pour former des longueurs de chauffe et pourvue de connexions électriques.

11. Elément de ressort (1) selon la revendication 10, **caractérisé en ce que** les fibres sont des fibres de carbone.

12. Elément de ressort (1) selon l'une des revendications 1 à 11, **caractérisé en ce que** les fibres sont des fibres en polyamide préalablement étirées.
